# EUROPEAN PATENT SPECIFICATION

(11) **EP 3 416 006 B1**
(45) Date of publication and mention of the grant of the patent: **15.12.2021**
(21) Application number: 16889822.9
(22) Date of filing: 10.02.2016
(51) Int. Cl.: G05B 19/4061

(54) **DENTAL TECHNICAL OBJECT MANUFACTURING DEVICE, METHOD, AND PROGRAM**
VORRICHTUNG, VERFAHREN UND PROGRAMM ZUR HERSTELLUNG VON ZAHNTECHNISCHEN OBJEKTEN
DISPOSITIF, PROCÉDÉ ET PROGRAMME DE FABRICATION D'OBJET TECHNIQUE DENTAIRE

(43) Date of publication of application: 19.12.2018
(73) Proprietor: Fujitsu Limited, Kawasaki-shi, Kanagawa 211-8588 (JP)
(72) Inventor: SUZUKI, Masaru, Atsugi-shi Kanagawa 243-0018 (JP); FUJIWARA, Toshihisa, Atsugi-shi Kanagawa 243-0018 (JP); HARA, Sadayoshi, Atsugi-shi Kanagawa 243-0018 (JP)
(74) Representative: Hoffmann Eitle
(86) International application number: PCT/JP2016/053998
(87) International publication number: WO 2017/138120

(56) References cited:
- JP-A- H0 375 904
- JP-A- H0 423 103
- JP-A- H03 266 102
- JP-A- S62 246 459
- JP-A- 2002 328 711
- JP-A- 2007 286 688
- JP-A- 2007 286 688
- US-A- 4 821 201
- US-A- 5 079 713

## Description

### FIELD

The present invention relates to a dental appliance manufacturing device, a dental appliance manufacturing method, and a dental appliance manufacturing program.

### BACKGROUND

For example, when manufacturing a processed article such as a dental appliance, a manufacturing device equipped with a processing mechanism is employed to perform cutting processing or the like on stock material for the processed article. Processing is performed on a material by controlling the position of a processing head along three orthogonal axes using numerical control, for example.

Various methods are adopted in such a manufacturing device to reduce the processing time, such as processing two faces by flipping the material over, or by disposing a pair of processing mechanisms so as to face each other across the material in the middle, and performing simultaneous processing.

There is also a proposal for a numerically controlled device that avoids collisions with obstructions, such as materials, tools, tailstocks, and the like that lie in the movable range of a machine tool when an operator is performing any operation during manual operation of a machine tool. In such devices, functions are generated to control axial movements of moving bodies in the machine tool according to manual axial movement operations. Profile data of a moving body and profile data of any obstructions that might possibly interfere with the moving bodies are stored. A check is then made as to whether or not there is going to be any interference with the profile data of the obstructions, by moving the profile data of the moving body in the movement direction of the axial movement operation prior to starting the generation of a function according to the manual axial movement operation. Then, in cases in which interference would occur, an axial movement stop position is calculated that is a desired distance away from the position of interference in the opposite direction to the movement direction, and a function is generated so as to stop the moving body at the movement stop position.

Further, Patent Document 3 relates to a technique of estimating interference between moving members of a tool, a cutting-tool holder or similar, using three-dimensional model data. More specifically, the next possible to detect more reliably several interference between moving members based on two signals commands of an NC program and carries out separate operations before issuing the instruction to move. Also, Patent Document 4 relates to a method of revising and NC program or four-axis lathes. According to this method, interpolative simulations are executed by interpolation similar data one block at a time in a successive manner, based on first and second NC programs. Accordingly, Patent Document 4 simulates the immediately following instruction to determine whether a not an interference between the two be controlled tools will occur. Also, Patent Document 5 relates to a method and apparatus for preventing to collision. Herein, a machine-tool is numerically controlled and has a plurality of movable members controlled by respective programs. These programs are automatically altered to reliably avoid collision between the movable members.

### Related Art Documents

### Patent Documents

Patent Document 1: Japanese Patent Application Laid-Open (JP-A) No. 2006-059187
Patent Document 2: JP-A No. S63-266505
Patent Document 3: JP 2007 286688 A
Patent Document 4: US 4 821 201 A
Patent Document 5: US 5 079 713 A

### SUMMARY

### Technical Problem

When performing simultaneous processing using plural processing mechanisms as described above, there is a need to perform control such that respective processing mechanisms do not interfere. Although conventional technology exists to avoid interference between a processing mechanism and an obstruction lying within the movable range of the processing mechanism, in such cases the obstruction is a stationary object. This technology is accordingly not applicable to avoiding interference between processing mechanisms that are moving.

An object of an aspect of the present invention is to suppress interference between plural processing mechanisms in a dental appliance manufacturing device. Solution to Technical Problem

The present invention is defined by the appended claims.

### Effects of Invention

The aspect has the effect of enabling interference between plural processing mechanisms of a dental appliance manufacturing device to be suppressed.

### BRIEF DESCRIPTION OF DRAWINGS

Fig. 1 is a block diagram illustrating an outline configuration of a dental appliance manufacturing device according to first and third exemplary embodiments.
Fig. 2 is a perspective view of the external appearance a processing machine of first and second embodiments.
Fig. 3 is a diagram illustrating an example of NC data in the first and second embodiments.
Fig. 4 is a block diagram illustrating a schematic configuration of a computer that functions as a controller of the dental appliance manufacturing device according to the first to third exemplary embodiments.
Fig. 5 is a flowchart illustrating an example of control processing in dental appliance manufacture.
Fig. 6 is a diagram to explain dividing of NC data.
Fig. 7 is a diagram to explain interference avoidance control.
Fig. 8 is a diagram to explain wait interference avoidance control.
Fig. 9 is a diagram illustrating an example of correction of NC data.
Fig. 10 is a diagram to explain retraction interference avoidance control.
Fig. 11 is a diagram to explain acceleration/deceleration interference avoidance control.
Fig. 12 is a diagram to explain acceleration/deceleration interference avoidance control.
Fig. 13 is a diagram to explain processing sequence change interference avoidance control.
Fig. 14 is a flowchart illustrating another example of control processing in dental appliance manufacture.
Fig. 15 is a block diagram illustrating an outline configuration of a dental appliance manufacturing device according to the second exemplary embodiment.
Fig. 16 is a flowchart illustrating an example of adjustment processing.
Fig. 17 is a perspective view of the external appearance of a processing machine in the third exemplary embodiment.
Fig. 18 is a diagram illustrating an example of NC data in the third exemplary embodiment.
Fig. 19 is a diagram to explain an occurrence of interference due to the size of a cutter section.

### DESCRIPTION OF EMBODIMENTS

Detailed description follows regarding an example of an exemplary embodiment according to the present invention, with reference to the drawings.

### First Exemplary Embodiment

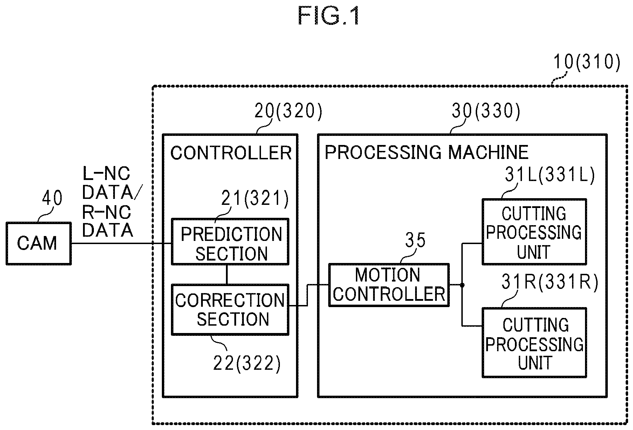

As illustrated in Fig. 1, a dental appliance manufacturing device 10 according to a first exemplary embodiment includes a controller 20 and a processing machine 30. Numerical control (NC) data generated in computer aided manufacturing (CAM) 40 is input to the dental appliance manufacturing device 10. The controller 20 controls the processing machine 30 based on the input NC data.

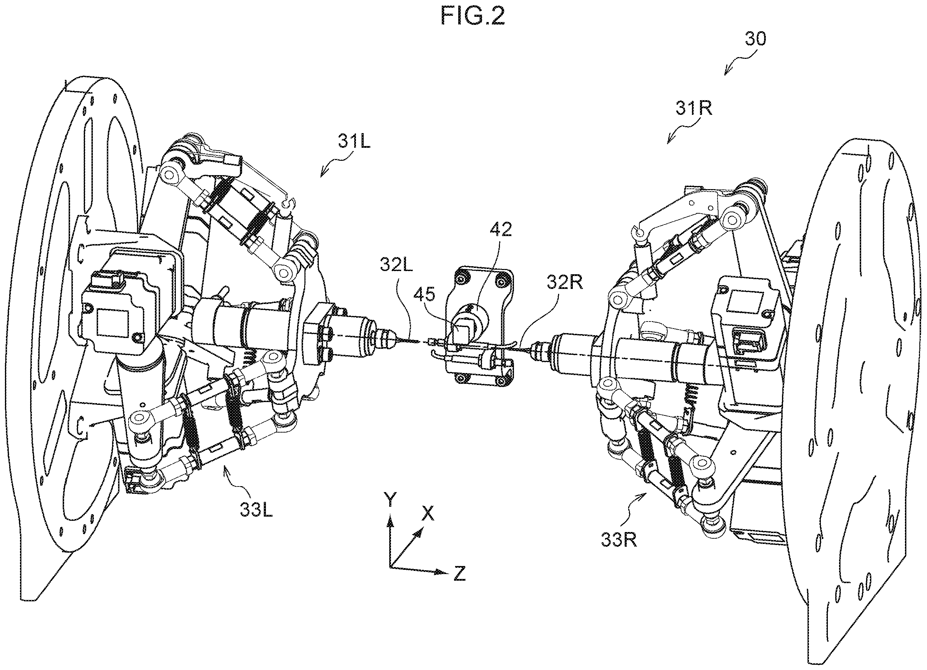

As illustrated in Fig. 2, the processing machine 30 is equipped with two cutting processing units 31L, 31R. The cutting processing unit 31L and the cutting processing unit 31R are disposed so as to face each other across a processing stage 42 in the middle, on which a cutting workpiece 45 (material of a dental appliance) is set up on. The cutting processing unit 31L also includes a cutter section 32L such as a drill for processing the cutting workpiece 45 set up on the processing stage 42 by cutting, and a drive section 33L to move the cutter section 32L. For example, the drive section 33L supports the cutter section 32L such that the axial direction of the cutter section 32L is parallel to the Z axis (described in detail later). The drive section 33L includes an arm to move the supported cutter section 32L to a specified position within a processing machine coordinate system, and a motor to drive the arm. The cutting processing unit 31R similarly includes a cutter section 32R and a drive section 33R. The drive sections 33L, 33R are driven according to pulse signals output from a motion controller 35, described later.

Note that the processing machine coordinate system may be a coordinate system with three orthogonal axes (X axis, Y axis, and Z axis) having an origin at a predetermined position on the processing stage 42 (the center position thereof, for example). Note that in the present exemplary embodiment, as illustrated in Fig. 2, the Y axis is in the vertical direction, the Z axis is a direction orthogonal to the Y axis and is a direction the cutting processing unit 31L and the cutting processing unit 31R face each other along, and the X axis is a horizontal direction orthogonal to both the Y axis and the Z axis.

The processing machine 30 also includes a motion controller 35, as illustrated in Fig. 1. The motion controller 35 outputs pulse signals to the drive sections 33L, 33R according to NC data output from the controller 20, described later.

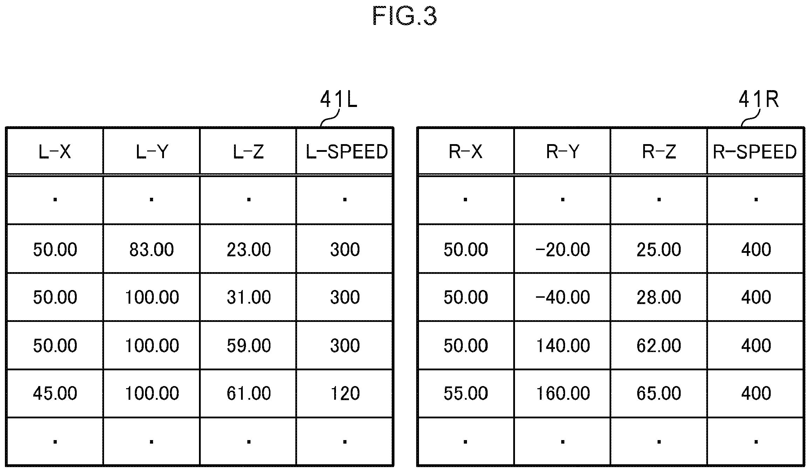

The controller 20 also receives the NC data input from CAM 40. Fig. 3 illustrates an example of NC data. As described above, the processing machine 30 of the dental appliance manufacturing device 10 includes the two cutting processing units 31L, 31R. Therefore, NC data 41L for use by the cutting processing unit 31L (referred to below as "L-") and NC data 41R for use by the cutting processing unit 31R (referred to below as "R-") is input from the CAM 40.

The L-NC data 41L is data combining post-movement coordinate values (L-X, L-Y, and L-Z) of a predetermined position (for example, a tip portion) on the cutter section 32L, and a movement speed (L-speed) when moving the cutter section 32L to the post-movement coordinate values. Similarly, the R-NC data 41R is data combining post-movement coordinate values (R-X, R-Y, and R-Z) of a predetermined position (for example, a tip portion) on the cutter section 32R, and a movement speed (R-speed) when moving the cutter section 32R to the post-movement coordinate values. One set of coordinate values and movement speed data is one segment's worth of data in the NC data (one line's worth of data in the example of Fig. 3, referred to below as a "segment of NC data"). The cutting processing units 31L, 31R are respectively controlled by the L-NC data 41L and the R-NC data 41R that each include plural segments of NC data, so as to implement a chain (series) of processes for cutting processing.

Moreover, as illustrated in Fig. 1, the controller 20 functionally includes a prediction section 21 and a correction section 22.

The prediction section 21 arranges the segments of NC data respectively contained in the input L-NC data 41L and R-NC data 41R along the time axis, and then re-divides the segments of NC data such that control times for cutting processing as indicated in segments of NC data at corresponding places in the sequence from the start of processing are the same as each other. The prediction section 21 then compares the corresponding segments of NC data in the L-NC data 41L and the R-NC data 41R against each other, and predicts whether or not interference will occur between the cutter section 32L and the cutter section 32R at the cutting processing time indicated by that segment of NC data.

The correction section 22 corrects at least one of the L-NC data 41L and the R-NC data 41R when the prediction section 21 has predicted that interference will occur between the cutter section 32L and the cutter section 32R, so as to avoid interference. The correction section 22 outputs the corrected L-NC data 41L and the R-NC data 41R to the motion controller 35.

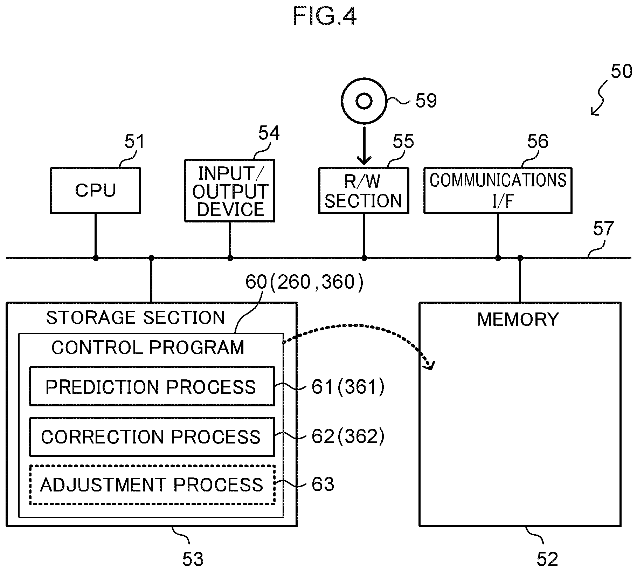

The controller 20 in the dental appliance manufacturing device 10 may, for example, be implemented by a computer 50 as illustrated in Fig. 4. The computer 50 includes a CPU 51, a memory 52 serving as a temporary storage region, and a non-volatile storage section 53. The computer 50 also includes an input/output device 54, a read/write (R/W) section 55 to control reading data from a storage medium 59 and writing data to the storage medium 59, and a communications interface (I/F) 56. The CPU 51, the memory 52, the storage section 53, the input/output device 54, the R/W section 55, and the communications I/F 56 are connected together through a bus 57.

The storage section 53 may be implemented by a hard disk drive (HDD), a solid state drive (SSD), flash memory, or the like. A control program 60 for dental appliance manufacture is stored on a storage section 53 serving as a storage medium. The control program 60 causes the computer 50 to function as the controller 20 of the dental appliance manufacturing device 10. The control program 60 includes a prediction process 61 and a correction process 62.

The CPU 51 reads the control program 60 from the storage section 53, loads the control program 60 in the memory 52, and sequentially executes each of the processes contained in the control program 60. The CPU 51 operates as the prediction section 21 illustrated in Fig. 1 by executing the prediction process 61. The CPU 51 operates as the correction section 22 illustrated in Fig. 1 by executing the correction process 62. The computer 50 executing the control program 60 thereby functions as the controller 20 of the dental appliance manufacturing device 10.

Note that the functions implemented by the control program 60 may, for example, be implemented by a semiconductor integrated circuit, or more precisely by an application specific integrated circuit (ASIC) or the like.

Next, description follows regarding operation of the dental appliance manufacturing device 10 according to the first exemplary embodiment.

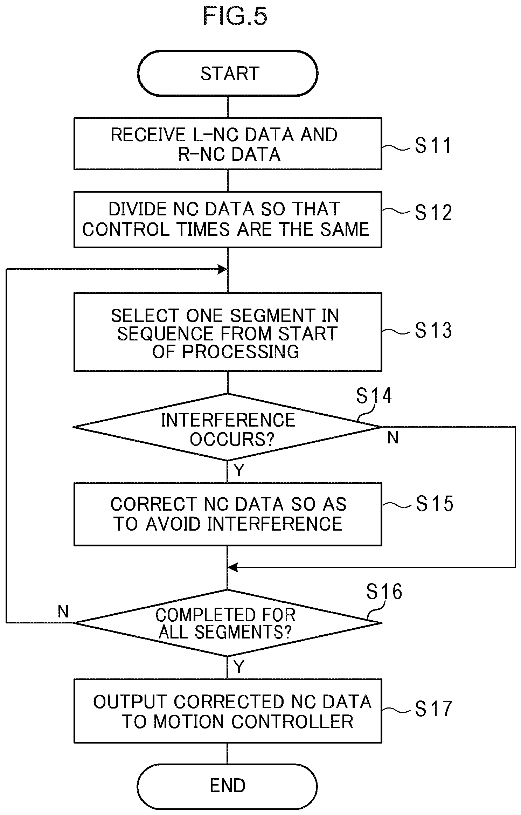

First, profile data (3D data or the like) for a dental appliance to be manufactured is generated by computer aided design (CAD) or the like. Then L-NC data 41L and R-NC data 41R is generated by the CAM 40 based on this profile data. At this stage, the L-NC data 41L and the R-NC data 41R may be respectively generated without consideration to interference between the cutter section 32L and the cutter section 32R during simultaneous processing. When the L-NC data 41L and the R-NC data 41R generated by the CAM 40 has been input to the dental appliance manufacturing device 10, the controller 20 executes control processing for dental appliance manufacture as illustrated in Fig. 5.

At step S11 of the dental appliance manufacturing control processing illustrated in Fig. 5, the prediction section 21 receives the input L-NC data 41L and R-NC data 41R.

Next, at step S12, the prediction section 21 arranges the plural segments ofNC data respectively included in the L-NC data 41L and the R-NC data 41R input thereto along the time axis, and then computes control times based on each of the segments of NC data. More specifically, the prediction section 21 takes a distance between a position indicated by the coordinate values included in the previous segment of NC data to a position indicated by coordinate values included in the segment of NC data currently being computed, and divides this distance by the movement speed contained in the current segment of NC data, so as to compute the control time for the current segment of NC data. In the following, positions indicated by the coordinate values included in segments of NC data are referred to as the "specified positions of the segments of NC data", and the movement speeds included in the segments of NC data are referred to as the "specified movement speeds of the segments of NC data".

The prediction section 21 then associates segments of NC data segments of NC data having the same control time in sequence from the start of processing in the L-NC data 41L and the R-NC data 41R with each other. Moreover, when the segments of NC data do not have a one-to-one correspondence, the prediction section 21 divides the segments of NC data so that there is the same number of segments ofNC data in the L-NC data 41L and the R-NC data 41R.

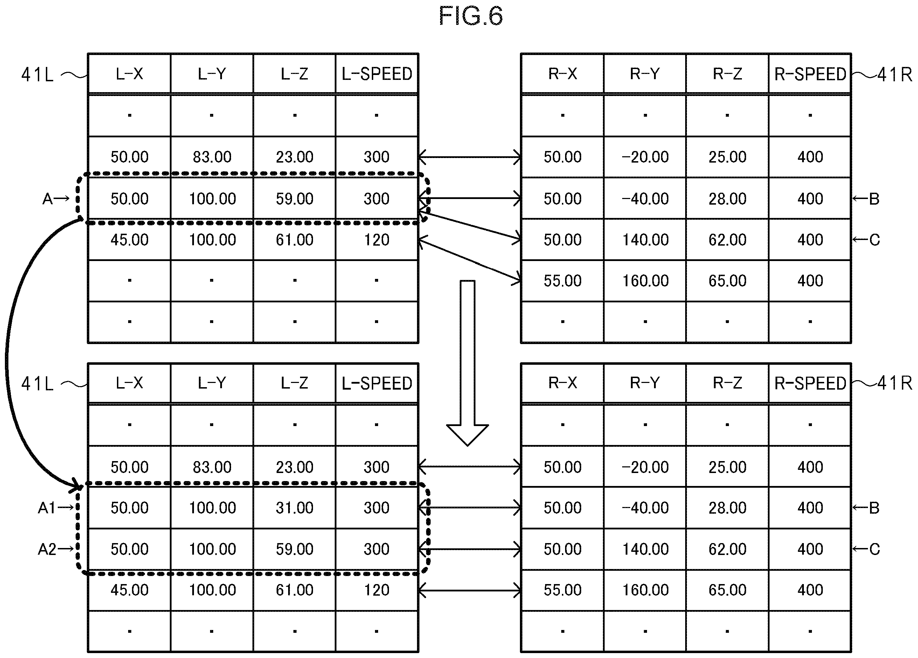

Take, for example, a case in which the prediction section 21 receives the L-NC data 41L and the R-NC data 41R as illustrated at the top stage of Fig. 6. The L-segment ofNC data A corresponds to the R-segments ofNC data B and C. In such cases, there is a one-to-two correspondence of the L-segments of NC data with the R-segments of NC data. The prediction section 21 therefore, as illustrated in the bottom stage of Fig. 6, divides the segment of NC data A into segments of NC data A1 and A2 to give a two-to-two correspondence between the L-segments of NC data and the R-segments of NC data. More specifically, the prediction section 21 generates a segment of NC data A1 including coordinate values indicating a position on the track for movement to the specified position of the segment of NC data A that will be the position arrived at when moved for the control time of the segment of NC data B at the specified movement speed of the segment of NC data A. The prediction section 21 employs the original segment of NC data A as a segment of NC data A2, and inserts the generated segment of NC data A1 in front of the segment of NC data A2. The segment ofNC data A1 and the segment of NC data B, and the segment of NC data A2 and the segment of NC data C, thereby correspond to each other.

Then at the next step S13, the prediction section 21 selects one segment in the sequence from the start of processing of the respective re-divided segments of the L-NC data 41L and R-NC data 41R.

Then at the next step S14, the prediction section 21 predicts whether or not interference will occur between the cutter section 32L and the cutter section 32R when the cutter sections 32L and 32R are being moved to the specified positions of the segments of NC data for the selected segment. For example, the prediction section 21 is able to predict that interference will occur when the track of the cutter section 32L and the track of the cutter section 32R cross each other between the specified position of the previous segments of NC data and the specified position of the selected segments of NC data. Processing transitions to step S15 when interference is predicted to occur between the cutter section 32L and the cutter section 32R in the selected segment.

Note that the prediction section 21 may predict not only the occurrence of interference between the cutter sections 32L and the cutter section 32R, but also the occurrence of interference between the whole body of the cutting processing unit 31L and the whole body of the cutting processing unit 31R. In such cases, for example, the prediction section 21 identifies a space swept out by the cutting processing unit 31L when moving from the specified position of the previous segment of NC data to the specified position of the selected segment of NC data. The prediction section 21 is then able to predict the occurrence of interference when part of the cutting processing unit 31R enters this identified space while moving from the specified position of the previous segment of NC data to the specified position of the selected the segment of NC data. The space can be identified by preparing profile data of the cutting processing units 31L, 31R in advance, and then performing identification based on this profile data and control quantities from the NC data.

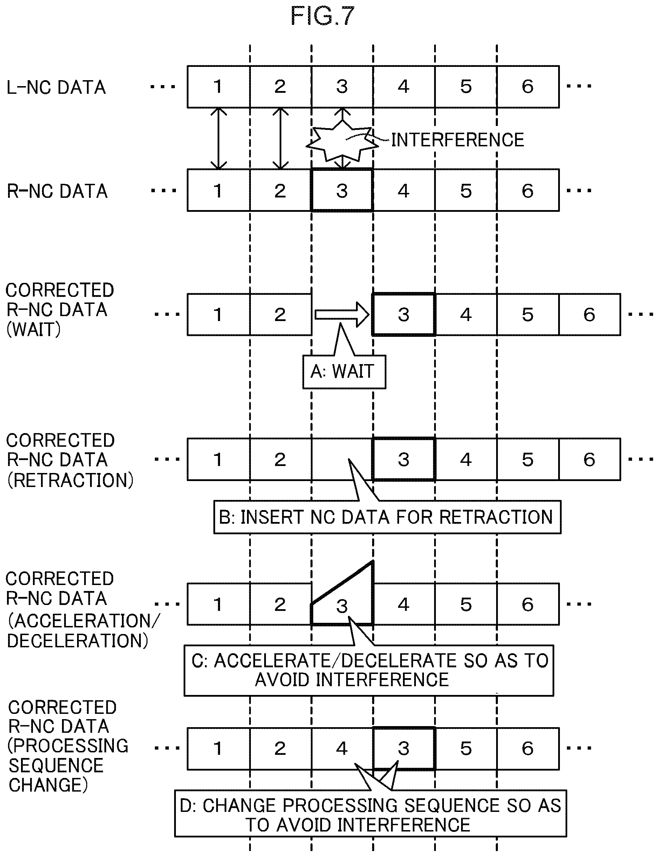

At step S15, the correction section 22 corrects at least one of the L-NC data 41L and the R-NC data 41R so as to avoid interference. In the present exemplary embodiment, the correction section 22 corrects the NC data so as to perform any interference avoidance control of "wait", "retraction", "acceleration/deceleration", and "processing sequence change" interference avoidance control. A detailed description follows regarding NC data correction for each type of interference avoidance control, with reference to Fig. 7. Note that in Fig. 7 each of the blocks appended with numbers represents one segment of NC data. Moreover, an example is described of a case in which the R-NC data 41R is corrected.

The interference avoidance control for "wait" is control to cause the cutter section 32R to wait and not move to the position where interference with the cutter section 32L is predicted to occur. The correction section 22 blanks out the R-segment of NC data for the segment where interference is predicted to occur as NC data correction for "wait" interference avoidance control, as illustrated at A in Fig. 7. Along with this action, the correction section 22 also shifts subsequent R-segments of NC data to one segment later.

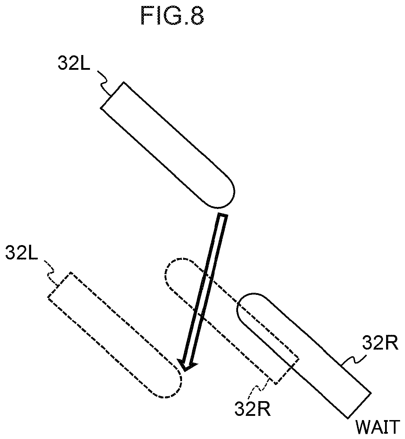

For example, as illustrated in Fig. 8, interference is predicted to occur when the cutter sections 32L and 32R respectively move from the positions indicated by the solid lines to the positions indicated by the broken lines. Blanking out the R-segment ofNC data for this segment causes the cutter section 32R to wait at the specified position of the previous segment of NC data (the position indicated by the solid line) while the cutter section 32L is moving from the position indicated by the solid line to the position indicated by the broken line. Interference between the cutter section 32L and the cutter section 32R is thereby avoided.

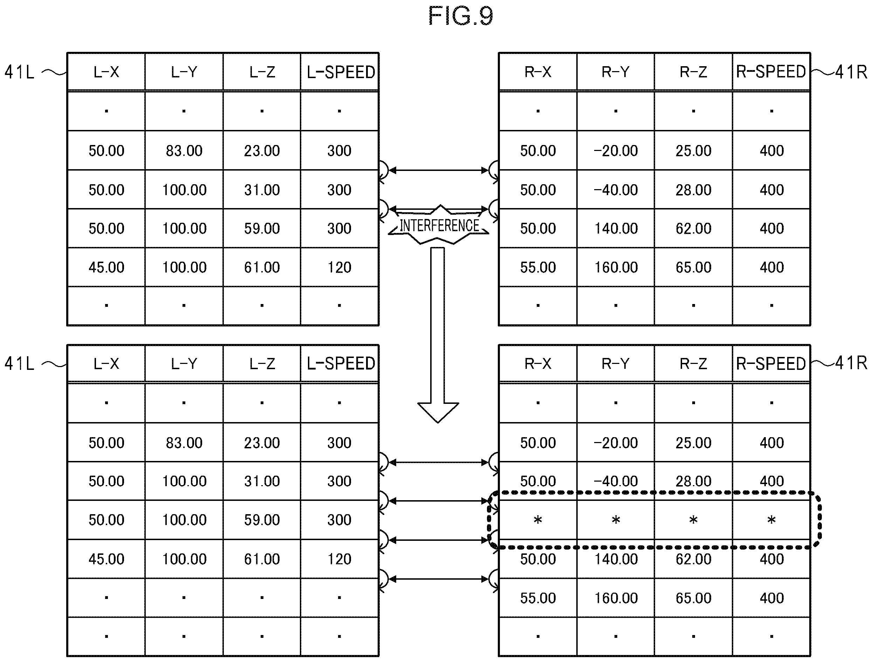

Specifically, correction of the NC data is performed by, for example as illustrated in Fig. 9, inserting a segment of NC data to avoid interference into the segment in which interference is predicted to occur (the broken line portion in Fig. 9). In the example in Fig. 9, blanking out is represented by the symbol "*". The L-segments of NC data and the corrected R-segments of NC data are then compared with each other for subsequent segments to determine whether or not interference will occur. In the corrected R-segments of NC data 41R, due to the insertion of the NC data for interference avoidance, segments that have been associated with each other so as to have the same control times at step S12 become shifted away from each other. Therefore, the prediction section 21 may re-execute the processing of the step S12 for these subsequent segments. Alternatively, at step S12 the L-NC data 41L and the R-NC data 41R may be respectively divided into segments so as to have the same predetermined control time as each other. In such cases, since the control times of all the segments of NC data are the same as each other, there is no need to re-associate the NC data.

In "retraction" interference avoidance control, control is performed so as to retract the cutter section 32R from the position where interference with the cutter section 32L is predicted to occur. As the NC data correction for "retraction" interference avoidance control, the correction section 22 shifts the R-segments of NC data for segments subsequent to the segment in which interference is predicted to occur later by one segment, as illustrated at B in Fig. 7. The correction section 22 also inserts a segment of NC data to retract the cutter section 32R from the position where interference is predicted to occur by insertion into the segment where interference is predicted to occur.

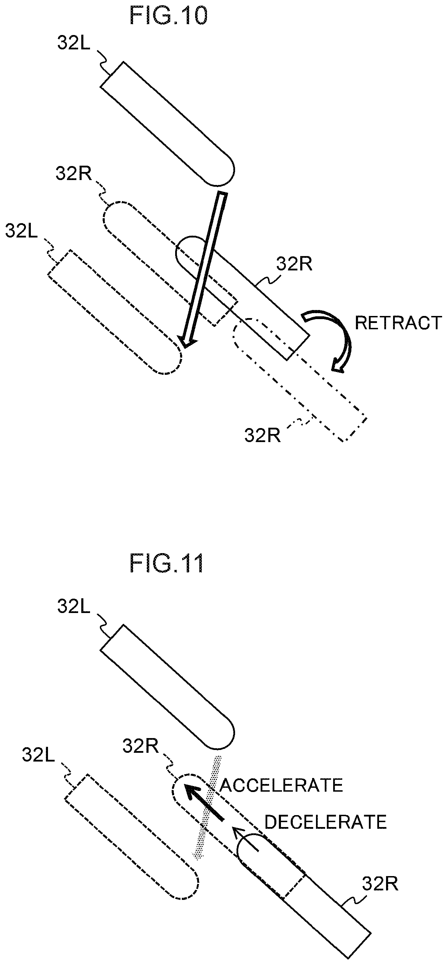

For example, as illustrated in Fig. 10, interference is predicted to occur even if the cutter section 32R is caused to wait at the position indicated by the solid line in a case in which the cutter sections 32L and 32R are respectively moved from the positions indicated by the solid lines to the positions indicated by the broken lines. The correction section 22 accordingly generates a segment of NC data to move the cutter section 32R to a position where interference will not occur (the position indicated by the single dot broken line), and also moves the cutter section 32R back to its original position (the position indicated by the solid line) after the cutter section 32L has passed. The correction section 22 inserts the generated segment of NC data for retraction into the appropriate location in the R-NC data 41R.

In order to implement such "retraction" interference avoidance control, for example, coordinate values indicating a retraction position may be added into the R-segment of NC data for the segment to be corrected. An appropriate movement speed is then associated with these coordinate values, and the movement speed associated with the original coordinate values is also corrected. Note that the movement speed to associate with each coordinate value is determined such that the control time of each segment is the same as the original control time. Alternatively, since the corrected segment of NC data contain plural coordinate values, the corrected segment of NC data may be divided at the respective portions of the coordinate values. In such cases the corresponding L-segment of NC data is also divided so as to have the same control times.

More specifically, for example, in cases in which the R-segment of NC data for retraction is inserted at segment 3 to cause retraction, as illustrated in Fig. 7, a segment of NC data (3-1) to move to the retraction position, and a segment of NC data (3-2) to return from the retraction position to the original position, are inserted. While doing so, the segment of NC data for segment 3 of the L-NC data 41L is also divided into a segment of NC data (3-1) and a segment of NC data (3-2).

Note that configuration may be made such that after the cutter section 32R has been retracted to the retraction position, the segment of NC data for the next segment may, instead of returning the cutter section 32R to the original position, move the cutter section 32R to the position indicated by the NC data for this next segment. In such cases, due to changing the movement distance of the cutter section 32R in the next segment, the specified movement speed of the next segment of NC data is corrected to correspond to the control time for the next segment.

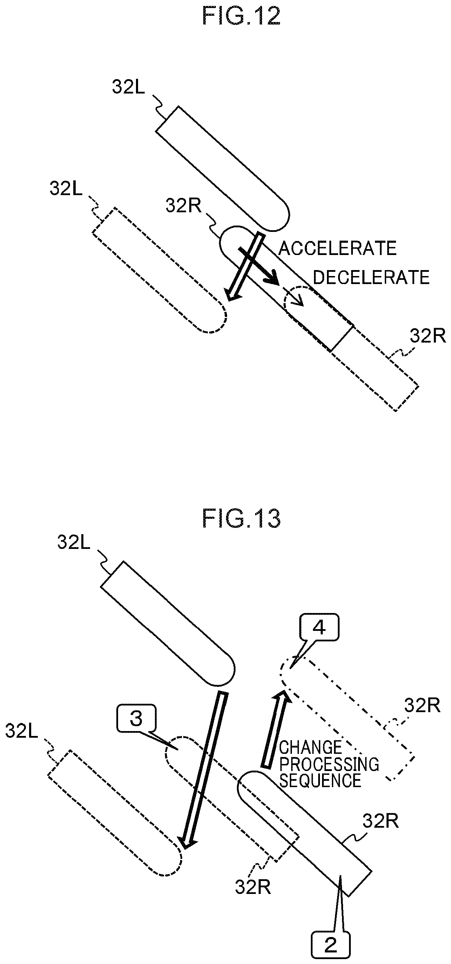

The "acceleration/deceleration" interference avoidance control is control to accelerate or decelerate the movement speed of the cutter section 32R so as to avoid interference with the cutter section 32L. As NC data correction for "acceleration/deceleration" interference avoidance control, the correction section 22 corrects so that the specified movement speed of the R-segment of NC data for the segment in which interference is predicted to occur changes within the segment, as illustrated at C in Fig. 7. For example, as illustrated in Fig. 11, the cutter section 32R is decelerated until the cutter section 32L has passed so that the cutter section 32R does not arrive at the position of interference. The cutter section 32R is then accelerated so as to move to the specified position after the cutter section 32L has passed. Alternatively, as illustrated in Fig. 12, the cutter section 32R is accelerated so as to move away from the position of interference before the cutter section 32L passes. Then after having moved away from the position of interference, the cutter section 32R is decelerated as it is being moved to the specified position. In order to implement such acceleration/deceleration interference avoidance control, for example, plural coordinate values may be given to the R-segment of NC data in the segment to be corrected. Then faster movement speeds than the original movement speeds are associated with the coordinate values corresponding to locations of acceleration, and slower movement speeds than the original movement speeds are associated with the coordinate values corresponding to locations of deceleration. Note that the movement speeds to be associated with each of the coordinate positions are determined such that the control times of such segments are the same as the original control times.

The "processing sequence change" interference avoidance control is control to avoid interference with the cutter section 32L by switching the sequence of processes in processing by the cutter section 32R. As NC data correction for "processing sequence change" interference avoidance control, the correction section 22 changes the sequence of segments of NC data where interference is predicted to occur for NC data of other segments where interference is not predicted to occur, as illustrated at D in Fig. 7.

For example, as illustrated in Fig. 13, interference with the cutter section 32L occurs in cases in which the cutter section 32R is moved from the specified position of the R-segment of NC data 2 (position indicated by the solid line) to the specified position of the R-segment of NC data 3 (position indicated by the broken line). However, interference with the cutter section 32L does not occur in cases in which the cutter section 32R is moved from the specified position of the R-segment of NC data 2 (position indicated by the solid line) to the specified position of the R-segment of NC data 4 (position indicated by the single dot broken line). In such cases, interference is avoided by switching the R-segment of NC data 3 with the R-segment of NC data 4.

Since the control times may be different between the segments of NC data to be switched, the correction section 22 corrects the specified movement speeds of the segments of NC data such that the control times of the segments after switching are the same control times as those of the L-segments of NC data. Moreover, since the movement distance of the next segment changes when segments are switched and the processing sequence is changed, the movement speeds are also corrected to match the control times of each of the respective segments. Moreover, after the segments have been switched, re-dividing of segments at step S12 may be executed again.

Note that although a case is described above in which the R-NC data 41R is corrected, the L-NC data 41 may be corrected, or both types of NC data may be corrected. In particular for "acceleration/deceleration", correcting both sets of NC data enables interference avoidance control to be performed smoothly.

When the prediction section 21 has not predicted at step S14 that interference will occur, processing transitions to step S16, skipping the processing of step S15.

Next at step S16, the correction section 22 determines whether or not all of the segments of the NC data have already been selected at step S13. Processing returns to step S13 when there are still some segments present that have not yet been selected, the prediction section 21 selects the next segment, and the processing of steps S14 and S15 is repeated. However, when selection of all segments has already been completed, processing transitions to step S17, the correction section 22 outputs the corrected L-NC data 41L and R-NC data 41R to the motion controller 35, and ends the dental appliance manufacturing control processing.

On receipt of the corrected L-NC data 41L and R-NC data 41R, the motion controller 35 outputs a pulse signal based on the received L-NC data 41L to the drive section 33L, and outputs a pulse signal based on the received R-NC data 41R to the drive section 33R. The drive sections 33L, 33R are thereby driven by quantities based on the pulse signals, and the cutter sections 32L and 32R are moved to the positions specified by the NC data. Cutting processing is accordingly performed on the cutting workpiece 45 set up on the processing stage 42.

As described above, the dental appliance manufacturing device 10 according to the first exemplary embodiment corrects NC data, when plural cutting processing units are being used during simultaneous processing, so as to control at least one of the cutting processing units such that the cutting processing units do not move to positions where they would interfere with each other. This enables interference avoidance to be performed efficiently when plural processing mechanisms are being used during simultaneous processing.

Moreover, the dental appliance manufacturing device 10 according to the first exemplary embodiment arranges the segments of NC data included in the L-NC data 41L and the R-NC data 41R along the time axis, and re-divides segments so that the control times are the same for cutting processing represented by segments of NC data corresponding to the same place in the sequence from the start of processing. Doing so enables the occurrence of interference between moving bodies, i.e., interference between the cutter section 32L and the cutter section 32R, to be easily predicted. Moreover, when respectively generating the L-NC data 41L and R-NC data 41R, there is no need to consider interference between the cutter section 32L and the cutter section 32R as controlled based on the L-NC data 41L and R-NC data 41R. This enables the computation load for NC data generation to be suppressed. Moreover, utilizing the independently generated L- and R-NC data enables interference avoidance control to be performed efficiently.

Note that in the first exemplary embodiment, the occurrence of interference is predicted for all of segments of the L-NC data 41L, 41R that contain the plural segments of NC data representing chains of processes for cutting processing, and the NC data is corrected in cases in which interference is predicted to occur. Cases have been described in which cutting processing chains are subsequently performed based on this corrected NC data; however, there is no limitation thereto. Configuration may be made such that the prediction of interference occurrence and the correction of NC data when interference would occur are executed in real-time during cutting processing.

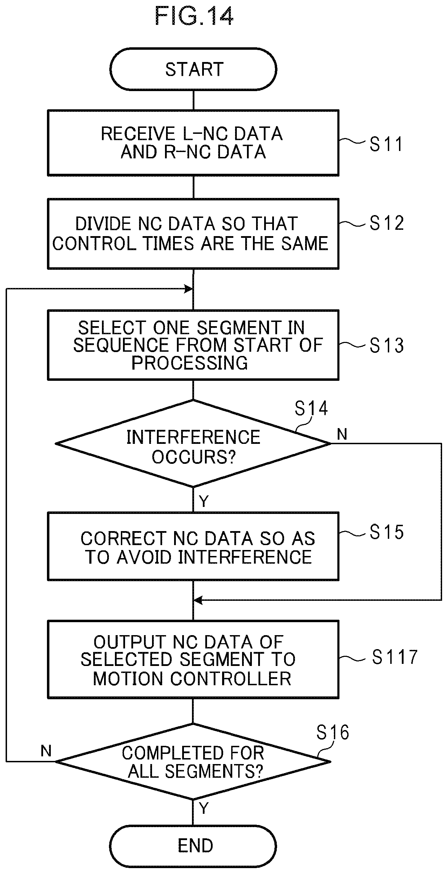

In such cases, the controller 20 executes the dental appliance manufacturing control processing illustrated in Fig. 14. Note that in the dental appliance manufacturing control processing illustrated in Fig. 14, the same step number is appended to processing that is the same as the dental appliance manufacturing control processing illustrated in Fig. 5, and detailed description thereof will be omitted.

In step S11 to S15, the prediction section 21 and the correction section 22 predict the occurrence of interference for a selected segment and perform NC data correction when interference will occur. Then at the next step S117, the correction section 22 outputs corrected L- and R-segments of NC data for the selected segment to the motion controller 35.

The motion controller 35 outputs pulse signals based on the received segments of NC data to the drive sections 33L, 33R. The drive sections 33L, 33R are driven by the amount of these pulse signals, and move the cutter sections 32L, 32R to the specified coordinate positions in the selected segment of NC data. Note that the motion controller 35 may be configured so as to immediately output pulse signals based on the received NC data to the drive sections 33L, 33R. Alternatively, configuration may be made such that the motion controller 35 buffers a predetermined number of segments' worth of the received segments of NC data, and the predetermined number of segments' worth of time lag is introduced from receipt of the NC data to output of the pulse signal.

At the next step S16, the correction section 22 determines whether or not processing for all segments has already been completed. Processing returns to step S13 when there are still some segments present that have not yet been selected. This enables the prediction of interference occurrence and the correction of NC data when interference will occur to be executed in real-time during cutting processing.

### Second Exemplary Embodiment

Next, description follows regarding a second exemplary embodiment. Note that the same reference numerals are appended to portions of a dental appliance manufacturing device according to the second exemplary embodiment that are similar to those of the dental appliance manufacturing device 10 according to the first exemplary embodiment, and detailed description thereof will be omitted.

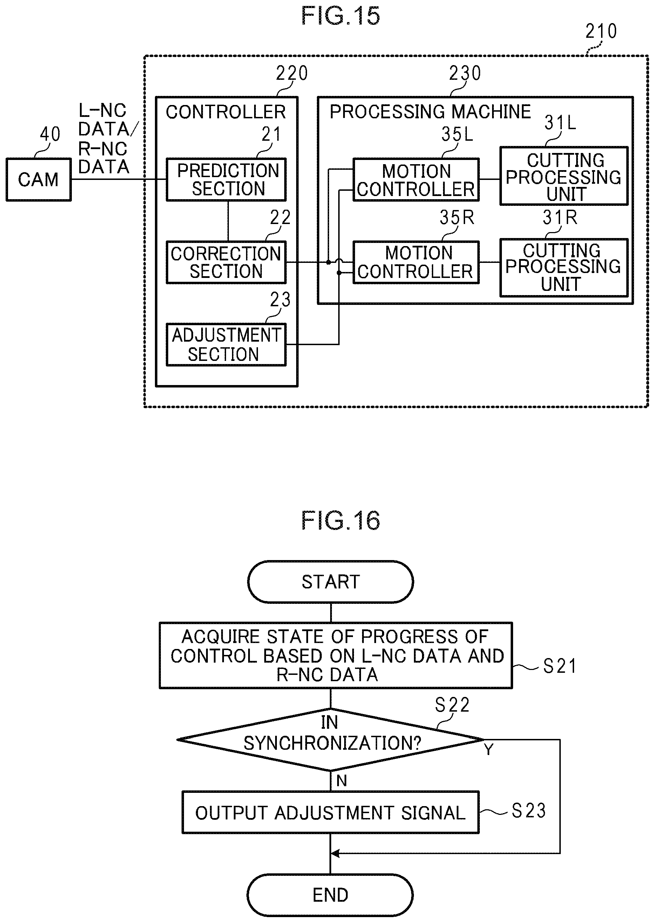

As illustrated in Fig. 15, a dental appliance manufacturing device 210 according to the second exemplary embodiment includes a controller 220 and a processing machine 230. The processing machine 230 includes motion controllers 35L, 35R instead of the motion controller 35 according to the first exemplary embodiment. The motion controller 35L outputs a pulse signal based on L-NC data 41L output from the controller 220 to a drive section 33L of a cutting processing unit 31L. The motion controller 35R outputs a pulse signal based on R-NC data 41L output from the controller 20 to a drive section 33R of a cutting processing unit 31R.

The controller 220 functionally includes a prediction section 21, a correction section 22, and an adjustment section 23.

As described above, in the second exemplary embodiment, the cutting processing units 31L, 31R are each controlled based on pulse signals output from the respective corresponding motion controllers 35L, 35R. Therefore, a misalignment may arise in actual control times even when the L-NC data 41L and R-NC data 41R are divided and associated with each other such that each segment has the same control time.

Thus, the adjustment section 23 compares a state of progress of control of the cutting processing unit 31L based on the L-NC data 41L against a state of progress of control of the cutting processing unit 31R based on the R-NC data 41R, and checks whether or not the two controls are in synchronization with each other. The adjustment section 23 outputs an adjustment signal to adjust a control timing to at least one of the motion controller 35L and 35R when the two controls are not in synchronization with each other. Adjustment of the control timing is not limited to being performed by the adjustment section 23. For example, the motion controllers 35L and 35R may perform adjustment of the control timing with reference to a common standard time or the like for the motion controllers 35L and 35R.

The controller 220 of the dental appliance manufacturing device 210 may, for example, be implemented by the computer 50 illustrated in Fig. 4. A dental appliance manufacturing control program 260 that causes the computer 50 to function as the controller 220 of the dental appliance manufacturing device 210 is stored in the storage section 53 of the computer 50. The control program 260 includes a prediction process 61, a correction process 62, and an adjustment process 63.

A CPU 51 reads the control program 260 from a storage section 53, loads the control program 260 into memory 52, and then sequentially executes each of the processes included in the control program 260. The CPU 51 operates as the adjustment section 23 illustrated in Fig. 15 by executing the adjustment process 63. The other processes are similar to the processes of the control program 60 according to the first exemplary embodiment. The computer 50 executing the control program 260 accordingly functions as the controller 220 of the dental appliance manufacturing device 210.

Note that the functionality implemented by the control program 260 may, for example, be implemented by a semiconductor integrated circuit, or more precisely by an ASIC or the like.

Next, description follows regarding operation of the dental appliance manufacturing device 210 according to the second exemplary embodiment. In the second exemplary embodiment, the adjustment processing illustrated in Fig. 16 is executed in parallel with control processing for dental appliance manufacture similar to that of the first exemplary embodiment (Fig. 5). The adjustment processing is repeatedly executed at predetermined timings. The predetermined timings may, for example, be a periodic timing, a timing of each boundary between predetermined segments, a timing specified by a user, or the like.

At step S21 in the adjustment processing illustrated in Fig. 16, the adjustment section 23 acquires a state of progress of control of the cutting processing unit 31L based on the L-NC data 41L and a state of progress of control of the cutting processing unit 31R based on the R-NC data 41R. For example, the adjustment section 23 acquires as the state of progress which portions of the pulse signals currently being output from the motion controllers 35L, 35R correspond to the L-NC data 41L and the R-NC data 41R.

Then at step S22, the adjustment section 23 compares the L-state of progress and the R-state of progress acquired at step S21, and determines whether or not the control of the cutting processing unit 31L and the control of the cutting processing unit 31R are in synchronization with each other. The adjustment processing is ended when the controls are in synchronization with each other.

However, processing transitions to step S23 when they are not in synchronization with each other, and the adjustment section 23 outputs an adjustment signal to adjust the control timing of at least one of the motion controller 35L and 35R. As the adjustment signal, the adjustment section 23 may, for example, output a signal to the motion controllers 35L, 35R to synchronize timings for output of pulse signals based on the segments of NC data for the next segments. Alternatively, as the adjustment signal, the adjustment section 23 may, for example, output a signal to stop the output of pulse signals to the motion controller 35L or 35R that corresponds to the cutting processing unit 31L or 31R in the most advanced state of progress, with the stop signal being output for the amount of misalignment time of the timings. After the adjustment section 23 has output the adjustment signal the adjustment processing is ended.

As described above, the dental appliance manufacturing device 210 according to the second exemplary embodiment adjusts so that controls of the cutting processing unit 31L and the cutting processing unit 31R are in synchronization with each other even in cases in which the cutting processing units 31L, 31R are each driven by different respective motion controllers 35L, 35R. The appropriate associations are thereby maintained between each segment of the L-segments of NC data and the R-segments of NC data that have been divided so that the control times are the same.

### Third Exemplary Embodiment

Next, description follows regarding a third exemplary embodiment. Note that the same reference numerals are appended to portions of a dental appliance manufacturing device according to the third exemplary embodiment that are similar to those of the dental appliance manufacturing device 10 according to the first exemplary embodiment, and detailed description thereof will be omitted.

As illustrated in Fig. 1, a dental appliance manufacturing device 310 according to the third exemplary embodiment includes a controller 320 and a processing machine 330.

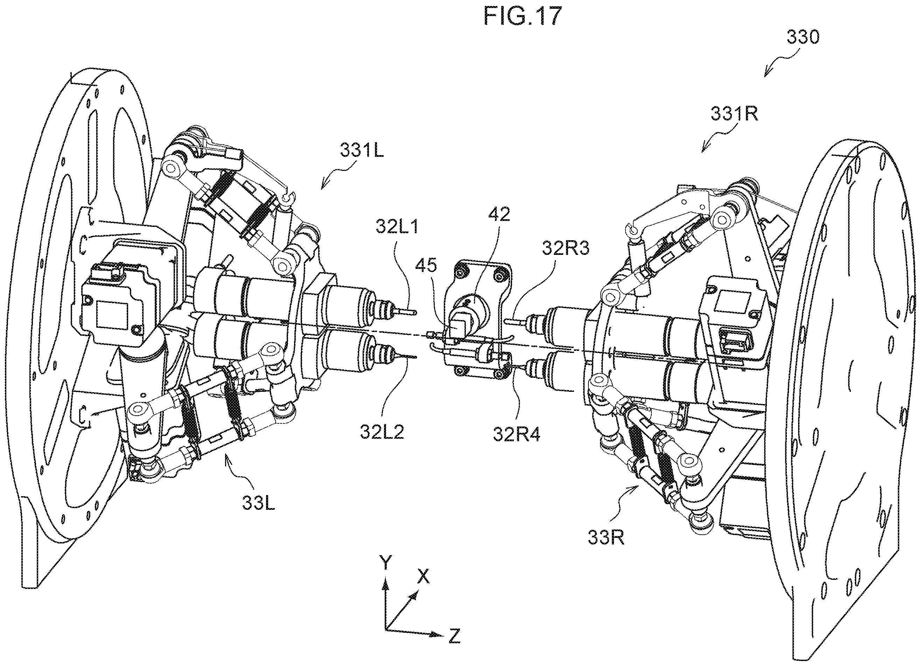

As illustrated in Fig. 17, the processing machine 330 is equipped with two cutting processing units 331L, 331R. Similarly to in the first exemplary embodiment, the cutting processing unit 331L and the cutting processing unit 331R in the third exemplary embodiment are also disposed so as to face each other across a processing stage 42 in the middle.

The cutting processing unit 331L includes two cutter sections 32L1, 32L2, and a drive section 33L to move the two cutter sections 32L1, 32L2 as a single unit. The cutter section 32L1 and the cutter section 32L2 are, for example, different types of cutter section, such as a drill for rough-cutting and a drill for finishing, and have different sizes as represented by at least one of length and diameter of drill bit. In the present exemplary embodiment, the cutter section 32L1 is larger in size than the cutter section 32L2. Moreover, the cutter section 32L1 and the cutter section 32L2 are supported by an arm as a single body such that their axial directions are parallel to the Z axis. Similarly, the cutting processing unit 331R also includes two cutter sections 32R3, 32R4 and a drive section 33L. The cutter section 32R3 is larger in size than the cutter section 32R4.

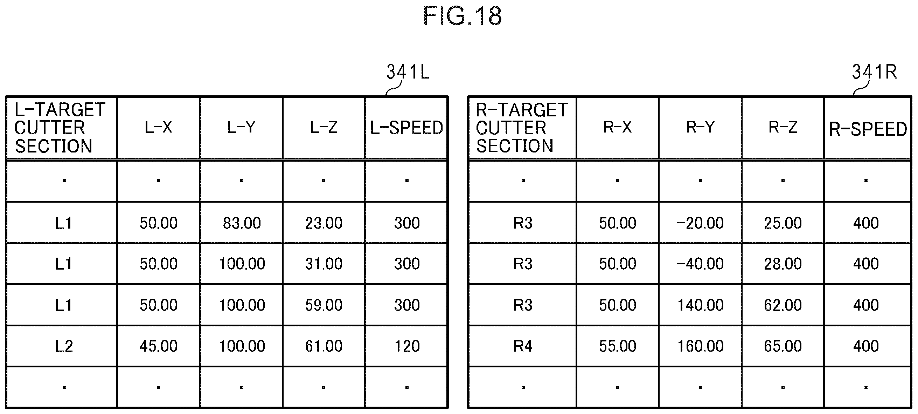

The controller 320 receives NC data input from a CAM 40. An example ofNC data of the third exemplary embodiment is illustrated in Fig. 18. Each of the segments of NC data in L-NC data 341L contains a coordinate position and a movement speed, as well as information to identify whether the cutter section 32Ll or the cutter section 32L2 is the target cutter section (L-target cutter section) for control by each of the segments of NC data. Similarly, each segment of NC data of R-NC data 341R contains a coordinate position and a movement speed, as well as information to identify whether the cutter section 32R3 or the cutter section 32R4 is the target cutter section (R-target cutter section) for control by each of the segments of NC data.

Moreover, as illustrated in Fig. 1, the controller 320 functionally includes a prediction section 321 and a correction section 322.

Similarly to the prediction section 21 in the first exemplary embodiment, the prediction section 321 re-divides the segments of NC data so that the control times are the same. The prediction section 321 compares corresponding segments of NC data in the L-NC data 41L and in the R-NC data 41R, and predicts whether or not cutter section interference will occur during cutting processing as represented by the segments of NC data. When doing so, the prediction section 321 not only predicts interference between cutter sections that are performing cutting processing, but also predicts the occurrence of interference with cutter sections not performing cutting processing. In interference occurrence prediction, the prediction section 321 computes a position of cutter sections not performing cutting processing based on specified positions in segment NC data for the cutter sections performing cutting processing, and on mounting positional relationships between the cutter sections.

For example, in cases in which the L-segments of NC data are for the target cutter section 32L1 and the R-segments ofNC data are for the target cutter section 32R3, the prediction section 321 predicts whether or not interference between the cutter section 32L1 and the cutter section 32R3 will occur, similarly to in the first exemplary embodiment. In addition, the prediction section 321 also predicts interference between the cutter section 32L1 and the cutter section 32R4, and interference between the cutter section 32L2 and the cutter section 32R4.

Similarly to the correction section 22 in the first exemplary embodiment, the correction section 322 corrects the NC data so that interference avoidance control is performed when the prediction section 321 has predicted interference will occur. When doing so, the correction section 322 corrects the NC data to perform interference avoidance control such that interference does not occur between the cutter sections 32L1 and 32L2, nor between the cutter sections 32R3 and 32R4.

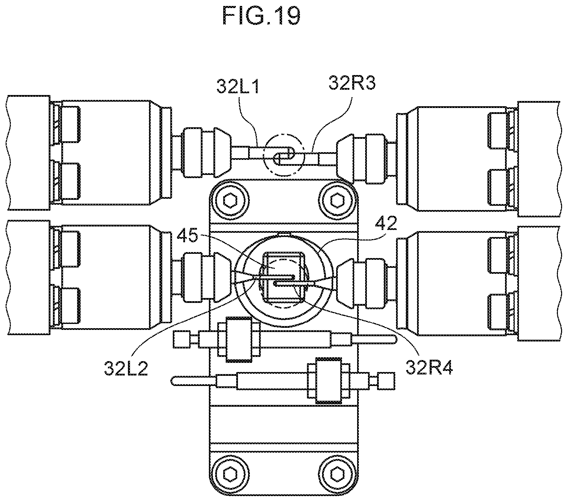

As illustrated in Fig. 19, there may be cases in which, although interference is avoided between the small sized cutter section 32L2 and the small sized cutter section 32R4 (the broken line area in Fig. 19), interference still occurs between the larger sized cutter section 32L1 and the larger sized cutter section 32R3 (the single dot broken line area in Fig. 19). The correction section 322 accordingly corrects the NC data to keep the larger sized cutter sections a predetermined distance apart when performing interference avoidance control.

The controller 320 of the dental appliance manufacturing device 310 may, for example, be implemented by the computer 50 illustrated in Fig. 4. A dental appliance manufacturing control program 360 to cause the computer 50 to function as the controller 320 of the dental appliance manufacturing device 310 is stored in the storage section 53 of the computer 50. The control program 360 includes a prediction process 361 and a correction process 362.

The CPU 51 reads the control program 360 from the storage section 53, loads the control program 360 in the memory 52, and sequentially executes each of the processes included in the control program 360. The CPU 51 operates as the prediction section 321 illustrated in Fig. 1 by executing the prediction process 361. Moreover, the CPU 51 operates as the correction section 322 illustrated in Fig. 1 by executing the correction process 362. The computer 50 executing the control program 360 thereby functions as the controller 320 of the dental appliance manufacturing device 310.

Note that the functionality implemented by the dental appliance manufacturing control program 360 may, for example, be implemented by a semiconductor integrated circuit, or more precisely by an ASIC or the like.

The operation of the dental appliance manufacturing device 310 according to the third exemplary embodiment only differs from that of the dental appliance manufacturing control processing illustrated in Fig. 5 in the point that interference of all of the cutter sections is considered in steps S14 and S15 thereof, and so description will be omitted thereof.

As described above, the dental appliance manufacturing device 310 according to the third exemplary embodiment is able to efficiently perform interference avoidance during simultaneous processing, even for cases in which the cutting processing units 31L, 31R have plural cutter sections.

Note that in the third exemplary embodiment respective motion controllers 35L, 35R may also be provided so as to correspond to the cutting processing units 31L, 31R. In such cases an adjustment section 23 similar to that of the second exemplary embodiment is provided in the controller 320.

Moreover, although cases have been described in each of the exemplary embodiments in which the cutting processing unit 31L and the cutting processing unit 31R are disposed so as to face each other across a processing stage 42 in the middle, there is no limitation thereto. For example, the cutting processing unit 31L may be disposed so as to perform processing diagonally from the upper left of a cutting workpiece 45 set on a processing stage 42, and the cutting processing unit 31R may be disposed at the so as to perform processing diagonally from the upper right thereof.

Moreover, although in each of the exemplary embodiment cases have been described in which there are two of the cutting processing units, there may be three or more cutting processing units. In such cases, plural sets of NC data corresponding to the three or more cutting processing units are divided so that the control times are the same for each segment. Then, when interference has been found to occur by comparing one or other segment of the NC data sets against each other, the NC data may be corrected for this segment.

Note that although in each of the exemplary embodiments described above the control programs 60, 260, 360 are pre-stored (installed) on the storage section 53, there is no limitation thereto. The control program according to the present invention may be provided in a format recorded on a recording medium such as a CD-ROM, DVD-ROM, USB memory or the like.

### Explanation of Reference Numerals

- 10,210,310: dental appliance manufacturing device
- 20, 220, 320: controller
- 21, 321: prediction section
- 22, 322: correction section
- 23: adjustment section
- 30, 230, 330: processing machine
- 31L, 31R, 331L, 331R: cutting processing unit
- 32L, 32L1, 32L2, 32R, 32R3, 32R4: cutter section
- 33L, 33R: drive section
- 35, 35L, 35R: motion controller
- 41L, 41R, 341L, 341R: NC data
- 42: processing stage
- 45: cutting workpiece
- 50: computer
- 51: CPU
- 52: memory
- 53: storage section
- 59: storage medium
- 60, 260, 360: control program

## Claims

1. A dental appliance manufacturing device (10, 210, 310) comprising:
a plurality of cutting processing units (31L, 31R, 331L, 331R) that includes a first cutting processing unit including a cutter section and a second cutting processing unit including another cutter section; and
a controller (20, 220, 320) that controls respective positions of the plurality of cutting processing units (31L, 31R, 331L, 331R) so as to cause the respective cutter sections of the plurality of cutting processing units (31L, 31R, 331L, 331R) to contact a cutting workpiece from different directions and execute cutting on the cutting workpiece;
wherein the controller (20, 220, 320) performs interference avoidance control on at least one of the first cutting processing unit and the second cutting processing unit such that the cutter section of the first cutting processing unit and the other cutter section of the second cutting processing unit do not move to a position of interference; and
the controller (20, 220, 320) is configured to:
control the positions of the plurality of cutting processing units (31L, 31R, 331L, 331R) based on sets of control data for the plurality of cutting processing units (31L, 31R, 331L, 331R), each set of the control data including a plurality set of segment data each including a set of coordinate values and movement speed data,
**characterized in that** the controller (20, 220, 320) is configured to:
re-divide the set of the control data respectively into a plurality set of segment data such that control times for cutting processing as indicated in sets of segment data at corresponding places in a sequence from the start of processing are the same as each other between the plurality of cutting processing units (31L, 31R, 331L, 331R), and
compare sets of re-divided segment data for the plurality of cutting processing units (31L, 31R, 331L, 331R) that are to be performed at the same time, and predicts whether or not interference will occur between the plurality of cutting processing units (31L, 31R, 331L, 331R) at the cutting processing time indicated by the sets of re-divided segment data.

2. The dental appliance manufacturing device (10, 310, 310) of claim 1, **characterized in that** as the interference avoidance control, the controller (20, 220, 320) performs one control of:
causing either the cutter section of the first cutting processing unit or the other cutter section of the second cutting processing unit to wait at a position away from the position of interference;
retracting either the cutter section of the first cutting processing unit or the other cutter section of the second cutting processing unit from the position of interference;
accelerating or decelerating an operation speed of at least one of the first cutting processing unit and the second cutting processing unit; or
changing a sequence of cutting on the cutting workpiece by at least one of the first cutting processing unit and the second cutting processing unit.

3. The dental appliance manufacturing device (10, 210, 310) of claim 1 or claim 2, **characterized in that** the controller (20, 220, 320):
controls a position of the first cutting processing unit based on first control data, and controls a position of the second cutting processing unit based on the second control data;
analyzes the first control data and the second control data; and
performs the interference avoidance control in cases in which interference is predicted to occur between the cutter section of the first cutting processing unit and the another cutter section of the second cutting processing unit.

4. The dental appliance manufacturing device (10, 210, 310) of claim 3, **characterized in that** the controller (20, 220, 320) :
analyzes the first control data and the second control data in relation to a chain of cutting processing on the cutting workpiece;
performs a correction in order to perform the interference avoidance control, the correction being performed on a part of at least one of the first control data and the second control data for which interference between the cutter section of the first cutting processing unit and the other cutter section of the second cutting processing unit is predicted; and
controls respective positions of the first cutting processing unit and the second cutting processing unit based on the first control data and the second control data after correction.

5. The dental appliance manufacturing device (10, 210, 310) of claim 3, **characterized in that** the controller:
controls, based on each of the first control data and the second control data divided into a plurality of segments, sequentially for each segment, respective positions of the first cutting processing unit and the second cutting processing unit,
analyzes the first control data and the second control data for a segment a predetermined number of segments later than a segment for which control is currently being executed; and
in cases in which interference between the cutter section of the first cutting processing unit and the other cutter section of the second cutting processing unit is predicted, performs a correction in order to perform the interference avoidance control, the correction being performed on at least one of the first control data and the second control data for the analyzed segment.

6. The dental appliance manufacturing device (10, 210, 310) of any one of claim 3 to claim 5, **characterized in that** the controller (20, 220, 320) predicts interference between the cutter section of the first cutting processing unit and the other cutter section of the second cutting processing unit by dividing the first control data and the second control data into segments that each have a control time of the first cutting processing unit based on the first control data the same as a control time of the second cutting processing unit based on the second control data, and comparing a segment of the first control data and a segment of the second control data to be executed at the same time.

7. The dental appliance manufacturing device (10, 210, 310) of any one of claim 3 to claim 6, **characterized in that** the controller (20, 220, 320) comprises:
a first control section that controls the first cutting processing unit based on the first control data;
a second control section that controls the second cutting processing unit based on the second control data; and
an adjustment section (23) that adjusts a control timing of at least one of the first control section and the second control section according to a comparison of a state of progress of control processes by the first control section based on the first control data against another state of progress of control processes by the second control section based on the second control data.

8. The dental appliance manufacturing device (10, 210, 310) of any one of claim 1 to claim 7, **characterized in that**:
the first cutting processing unit includes a first cutter section and a second cutter section;
the second cutting processing unit includes a third cutter section and a fourth cutter section; and
the controller (20, 220, 320) controls positions of the first cutting processing unit and the second cutting processing unit to cause either the first cutter section or the second cutter section of the first cutting processing unit, and to cause either the third cutter section or the fourth cutter section of the second cutting processing unit, to contact a cutting workpiece from different directions and execute cutting on the cutting workpiece, and
the controller (20, 220, 320) performs interference avoidance control on at least one of the first cutting processing unit and the second cutting processing unit so that the first cutter section and the second cutter section, and the third cutter section and the fourth cutter section, do not move to a position of interference.

9. The dental appliance manufacturing device (10, 210, 310) of claim 8, **characterized in that** the controller (20, 220, 320) performs the interference avoidance control such that there is a separation of predetermined distance or greater between a cutter section having the larger size from of the first cutter section and the second cutter section and a cutter section having the larger size from of the third cutter section and the fourth cutter section.

10. A dental appliance manufacturing method executed by a computer, the dental appliance manufacturing method comprising:
controlling respective positions of a plurality of cutting processing units (31L, 31R, 331L, 331R) such that respective cutter sections of the plurality of cutting processing units (31L, 31R, 331L, 331R) are caused to contact a cutting workpiece from different directions and execute cutting on the cutting workpiece; and
performing interference avoidance control on at least one of first cutting processing unit and second cutting processing unit different from the first cutting processing unit, from among the plurality of cutting processing units (31L, 31R, 331L, 331R), such that the first cutting processing unit and the second cutting processing unit do not move to a position of interference,
wherein controlling respective positions of the plurality of cutting processing units (31L, 31R, 331L, 331R) includes:
controlling the positions of the plurality of cutting processing units (31L, 31R, 331L, 331R) based on sets of control data for the plurality of cutting processing units (31L, 31R, 331L, 331R), each set of the control data including a plurality set of segment data each including a set of coordinate values and movement speed data, and **characterized in that**
performing the interference avoidance control includes:
re-dividing the set of the control data respectively into a plurality set of segment data such that control times for cutting processing as indicated in sets of segment data at corresponding places in a sequence from the start of processing are the same as each other between the plurality of cutting processing units (31L, 31R, 331L, 331R), and
comparing sets of re-divided segment data for the plurality of cutting processing units (31L, 31R, 331L, 331R) that are to be performed at the same time, and predicting whether or not interference will occur between the plurality of cutting processing units (31L, 31R, 331L, 331R) at the cutting processing time indicated by the sets of re-divided segment data.

11. A dental appliance manufacturing program which, when executed on a computer, causes the computer to carry out the dental appliance manufacturing method according to claim 10.

12. A storage medium storing the dental appliance manufacturing program according to claim 11.

## Patentansprüche

1. Herstellungsvorrichtung (10, 210, 310) für ein zahntechnisches Gerät, umfassend:
eine Vielzahl von Fräsverarbeitungseinheiten (31L, 31R, 331L, 331R), die eine erste Fräsverarbeitungseinheit beinhaltet, die einen Fräser-Teilabschnitt beinhaltet, und eine zweite Fräsverarbeitungseinheit, die einen anderen Fräser-Teilabschnitt beinhaltet; und
eine Steuereinheit (20, 220, 320), die jeweilige Positionen der Vielzahl von Fräsverarbeitungseinheiten (31L, 31R, 331L, 331R) derart steuert, dass die jeweiligen Fräser-Teilabschnitte der Vielzahl von Fräsverarbeitungseinheiten (31L, 31R, 331L, 331R) veranlasst werden, ein Fräswerkstück aus unterschiedlichen Richtungen zu berühren und das Fräsen auf dem Fräswerkstück auszuführen;
wobei die Steuereinheit (20, 220, 320) eine Interferenzvermeidungssteuerung auf mindestens einer der ersten Fräsverarbeitungseinheit und der zweiten Fräsverarbeitungseinheiten derart ausführt, dass sich der Fräser-Teilabschnitt der ersten Fräsverarbeitungseinheit und der andere Fräser-Teilabschnitt der zweiten Fräsverarbeitungseinheit nicht zu einer Interferenzposition bewegen; und
die Steuereinheit (20, 220, 320) konfiguriert ist, um:
die Positionen der Vielzahl von Fräsverarbeitungseinheiten (31L, 31R, 331L, 331R) basierend auf Sätzen von Steuerdaten für die Vielzahl von Fräsverarbeitungseinheiten (31L, 31R, 331L, 331R) zu steuern, wobei jeder Satz der Steuerdaten eine Vielzahl von Sätzen von Segmentdaten beinhaltet, die jeweils einen Satz von Koordinatenwerten und Bewegungsgeschwindigkeitsdaten beinhalten,
**dadurch gekennzeichnet, dass** die Steuereinheit (20, 220, 320) konfiguriert ist, um:
den Satz der Steuerdaten jeweils in eine Vielzahl von Sätzen von Segmentdaten derart neu zu unterteilen, dass die Steuerzeiten für die Fräsverarbeitung, wie in den Sätzen von Segmentdaten angegeben, an entsprechenden Stellen in einer Folge von dem Anfang der Verarbeitung miteinander zwischen der Vielzahl von Fräsverarbeitungseinheiten gleich sind, und
die Sätze neu unterteilter Segmentdaten für die Vielzahl von Fräsverarbeitungseinheiten (31L, 31R, 331L, 331R), die gleichzeitig ausgeführt werden sollen, zu vergleichen und vorherzusagen, ob eine Interferenz zwischen der Vielzahl von Fräsverarbeitungseinheiten (31L, 31R, 331L, 331R) zu dem Fräsverarbeitungszeitpunkt, der von den Sätzen neu unterteilter Segmentdaten angegeben wird, auftreten wird oder nicht.

2. Herstellungsvorrichtung (10, 310, 310) für ein zahntechnisches Gerät nach Anspruch 1, **dadurch gekennzeichnet, dass** als die Interferenzvermeidungssteuerung die Steuereinheit (20, 220, 320) eine Steuerung ausführt des:
Veranlassens entweder des Fräser-Teilabschnitts der ersten Fräsverarbeitungseinheit oder des Fräser-Teilabschnitts der zweiten Fräsverarbeitungseinheit an einer Position von der Interferenzposition weg zu warten;
Rückziehens entweder des Fräser-Teilabschnitts der ersten Fräsverarbeitungseinheit oder des Fräser-Teilabschnitts der zweiten Fräsverarbeitungseinheit von der Interferenzposition;
Beschleunigens oder Verlangsamens einer Betriebsgeschwindigkeit mindestens einer der ersten Fräsverarbeitungseinheit und der zweiten Fräsverarbeitungseinheit; oder
Änderns einer Fräsfolge auf dem Fräswerkstück durch mindestens eine der ersten Fräsverarbeitungseinheit und der zweiten Fräsverarbeitungseinheit.

3. Herstellungsvorrichtung (10, 210, 310) für ein zahntechnisches Gerät nach Anspruch 1 oder Anspruch 2, **dadurch gekennzeichnet, dass** die Steuereinheit (20, 220, 320):
eine Position der ersten Fräsverarbeitungseinheit basierend auf ersten Steuerdaten steuert, und eine Position der zweiten Fräsverarbeitungseinheit basierend auf den zweiten Steuerdaten steuert;
die ersten Steuerdaten und die zweiten Steuerdaten analysiert; und
die Interferenzvermeidungssteuerung in Fällen ausführt, in welchen das Auftreten von Interferenz zwischen dem Fräser-Teilabschnitt der ersten Fräsverarbeitungseinheit und dem anderen Fräser-Teilabschnitt der zweiten Fräsverarbeitungseinheit vorhergesagt ist.

4. Herstellungsvorrichtung (10, 210, 310) für ein zahntechnisches Gerät, nach Anspruch 3, **dadurch gekennzeichnet, dass** die Steuereinheit (20, 220, 320):
die ersten Steuerdaten und die zweiten Steuerdaten im Zusammenhang mit einer Reihe von Fräsverarbeitung auf dem Fräswerkstück analysiert;
eine Korrektur ausführt, um die Interferenzvermeidungssteuerung auszuführen, wobei die Korrektur auf einem Teil mindestens einer der ersten Steuerdaten und der zweiten Steuerdaten, für die Interferenz zwischen dem Fräser-Teilabschnitt der ersten Fräsverarbeitungseinheit und dem anderen Fräser-Teilabschnitt der zweiten Fräsverarbeitungseinheit vorhergesagt ist, ausgeführt wird; und
jeweilige Positionen der ersten Fräsverarbeitungseinheit und der zweiten Fräsverarbeitungseinheit basierend auf den ersten Steuerdaten und den zweiten Steuerdaten nach Korrektur steuert.

5. Herstellungsvorrichtung (10, 210, 310) für ein zahntechnisches Gerät nach Anspruch 3, **dadurch gekennzeichnet, dass** die Steuereinheit:
basierend auf jeden der ersten Steuerdaten und der zweiten Steuerdaten, die in eine Vielzahl von Segmenten unterteilt sind, sequenziell für jedes Segment jeweilige Positionen der ersten Fräsverarbeitungseinheit und der zweiten Fräsverarbeitungseinheit steuert,
die ersten Steuerdaten und die zweiten Steuerdaten für ein Segment eine vorbestimmte Anzahl von Segmenten später analysiert als ein Segment, für das die Steuerung aktuell ausgeführt wird; und
in Fällen, in welchen eine Interferenz zwischen dem Fräser-Teilabschnitt der ersten Fräsverarbeitungseinheit und dem anderen Fräser-Teilabschnitt der zweiten Fräsverarbeitungseinheit vorhergesagt ist, eine Korrektur ausführt, um die Interferenzvermeidungssteuerung auszuführen, wobei die Korrektur auf mindestens einer der ersten Steuerdaten und der zweiten Steuerdaten für das analysierte Segment ausgeführt wird.

6. Herstellungsvorrichtung (10, 210, 310) für ein zahntechnisches Gerät nach einem der Ansprüche 3 bis 5, **dadurch gekennzeichnet, dass** die Steuereinheit (20, 220, 320) eine Interferenz zwischen dem Fräser-Teilabschnitt der ersten Fräsverarbeitungseinheit und dem anderen Fräser-Teilabschnitt der zweiten Fräsverarbeitungseinheit durch Unterteilen der ersten Steuerdaten und der zweiten Steuerdaten in Segmente, die jeweils eine Steuerzeit der ersten Fräsverarbeitungseinheit basierend auf den ersten Steuerdaten gleich wie eine Steuerzeit der zweiten Fräsverarbeitungseinheit basierend auf den zweiten Steuerdaten aufweisen, vorhersagt und ein Segment der ersten Steuerdaten und ein Segment der zweiten Steuerdaten, die gleichzeitig ausgeführt werden sollen, vergleicht.

7. Herstellungsvorrichtung (10, 210, 310) für ein zahntechnisches Gerät nach einem der Ansprüche 3 bis 6, **dadurch gekennzeichnet, dass** die Steuereinheit (20, 220, 320) umfasst:
einen ersten Steuerteilabschnitt, der die erste Fräsverarbeitungseinheit basierend auf den ersten Steuerdaten steuert;
einen zweiten Steuerteilabschnitt, der die zweite Fräsverarbeitungseinheit basierend auf den zweiten Steuerdaten steuert; und
einen Einstellteilabschnitt (23), der einen Steuerzeitpunkt mindestens eines des ersten Steuerteilabschnitts und des zweiten Steuerteilabschnitts gemäß einem Vergleich eines Fortschrittszustands von Steuerprozessen durch den ersten Steuerteilabschnitt basierend auf den ersten Steuerdaten mit einem anderen Fortschrittszustand von Steuerprozessen durch den zweiten Steuerteilabschnitt basierend auf den zweiten Steuerdaten einstellt.

8. Herstellungsvorrichtung (10, 210, 310) für ein zahntechnisches Gerät nach einem des Anspruchs 1 bis 7, **dadurch gekennzeichnet, dass**:
die erste Fräsverarbeitungseinheit einen ersten Fräser-Teilabschnitt und einen zweiten Fräser-Teilabschnitt beinhaltet;
die zweite Fräsverarbeitungseinheit einen dritten Fräser-Teilabschnitt und einen vierten Fräser-Teilabschnitt beinhaltet;
die Steuereinheit (20, 220, 320) Positionen der ersten Fräsverarbeitungseinheit und der zweiten Fräsverarbeitungseinheit steuert, um entweder den ersten Fräser-Teilabschnitt oder den zweiten Fräser-Teilabschnitt der ersten Fräsverarbeitungseinheit zu veranlassen, und entweder den dritten Fräser-Teilabschnitt oder den vierten Fräser-Teilabschnitt der zweiten Fräsverarbeitungseinheit zu veranlassen, ein Fräswerkstück aus unterschiedlichen Richtungen zu berühren und Fräsen auf dem Fräswerkstück auszuführen, und
die Steuereinheit (20, 220, 320) eine Interferenzvermeidungssteuerung auf mindestens einer der ersten Fräsverarbeitungseinheit und der zweiten Fräsverarbeitungseinheit derart ausführt, dass sich der erste Fräser-Teilabschnitt und der zweite Fräser-Teilabschnitt sowie der dritte Fräser-Teilabschnitt und der vierte Fräser-Teilabschnitt nicht zu einer Interferenzposition bewegen.

9. Herstellungsvorrichtung (10, 210, 310) für ein zahntechnisches Gerät nach Anspruch 8, **dadurch gekennzeichnet, dass** die Steuereinheit (20, 220, 320) die Interferenzvermeidungssteuerung derart ausführt, dass eine Trennung mit vorbestimmter Distanz oder größer zwischen einem Fräser-Teilabschnitt, der die größere Größe des ersten Fräser-Teilabschnitt und des zweiten Fräser-Teilabschnitt aufweist, und einem Fräser-Teilabschnitt, der die größere Größe des dritten Fräser-Teilabschnitts und des vierten Fräser-Teilabschnitt aufweist, besteht.

10. Herstellungsverfahren für ein zahntechnisches Gerät, das von einem Computer ausgeführt wird, wobei das Herstellungsverfahren für ein zahntechnisches Gerät umfasst:
Steuern jeweiliger Positionen einer Vielzahl von Fräsverarbeitungseinheiten (31L, 31R, 331L, 331R) derart, dass jeweilige Fräser-Teilabschnitte der Vielzahl von Fräsverarbeitungseinheiten (31L, 31R, 331L, 331R) veranlasst werden, ein Fräswerkstück aus unterschiedlichen Richtungen zu berühren und Fräsen auf dem Fräswerkstück auszuführen; und
eine Interferenzvermeidungssteuerung auf mindestens einer der ersten Fräsverarbeitungseinheit und der zweiten Fräsverarbeitungseinheit unterschiedlich von der ersten Fräsverarbeitungseinheit aus der Vielzahl von Fräsverarbeitungseinheiten (31L, 31R, 331L, 331R) derart auszuführen, dass sich die erste Fräsverarbeitungseinheit und die zweite Fräsverarbeitungseinheit nicht zu einer Interferenzposition bewegen;
wobei das Steuern jeweiliger Positionen der Vielzahl von Fräsverarbeitungseinheiten (31L, 31R, 331L, 331R) beinhaltet:
Steuern der Positionen der Vielzahl von Fräsverarbeitungseinheiten (31L, 31R, 331L, 331R) basierend auf Sätzen von Steuerdaten für die Vielzahl von Fräsverarbeitungseinheiten (31L, 31R, 331L, 331R), wobei jeder Satz der Steuerdaten eine Vielzahl von Sätzen von Segmentdaten beinhaltet, die jeweils einen Satz von Koordinatenwerten und Bewegungsgeschwindigkeitsdaten beinhalten, und **dadurch gekennzeichnet, dass**
Ausführen der Interferenzvermeidungssteuerung beinhaltet:
Neuunterteilen des Satzes der Steuerdaten jeweils in eine Vielzahl von Sätzen von Segmentdaten derart, dass die Steuerzeiten für die Fräsverarbeitung, wie in den Sätzen von Segmentdaten angegeben, an entsprechenden Stellen in einer Folge von dem Anfang der Verarbeitung miteinander zwischen der Vielzahl von Fräsverarbeitungseinheiten (31L, 31R, 331L, 331R) gleich sind, und
Vergleichen der Sätze neu unterteilter Segmentdaten für die Vielzahl von Fräsverarbeitungseinheiten (31L, 31R, 331L, 331R), die gleichzeitig ausgeführt werden sollen, und Vorhersagen, ob eine Interferenz zwischen der Vielzahl von Fräsverarbeitungseinheiten (31L, 31R, 331L, 331R) zu dem Fräsverarbeitungszeitpunkt, der von den Sätzen neu unterteilter Segmentdaten angegeben wird, auftreten wird oder nicht.

11. Herstellungsprogramm für ein zahntechnisches Gerät, das, wenn es auf einem Computer ausgeführt wird, den Computer veranlasst, das Herstellungsverfahren für ein zahntechnisches Gerät nach Anspruch 10 auszuführen.

12. Speichermedium, das das Herstellungsprogramm des zahntechnischen Geräts nach Anspruch 11 speichert.

## Revendications

1. Dispositif de fabrication d'appareil dentaire (10, 210, 310) comprenant :
une pluralité d'unités de traitement de coupe (31L, 31R, 331L, 331R) qui incluent une première unité de traitement de coupe incluant une section coupante et une seconde unité de traitement de coupe incluant une autre section coupante ; et
un dispositif de commande (20, 220, 320) qui commande des positions respectives de la pluralité d'unités de traitement de coupe (31L, 31R, 331L, 331R) de sorte à amener les sections coupantes respectives de la pluralité d'unités de traitement de coupe (31L, 31R, 331L, 331R) à entrer en contact avec une pièce à couper depuis des directions différentes et à exécuter une coupe sur la pièce à couper ;
dans lequel le dispositif de commande (20, 220, 320) réalise une commande d'évitement d'interférence sur au moins une de la première unité de traitement de coupe et de la seconde unité de traitement de coupe de telle sorte que la section coupante de la première unité de traitement de coupe et l'autre section coupante de la seconde unité de traitement de coupe ne se déplacent pas vers une position d'interférence ; et
le dispositif de commande (20, 220, 320) est configuré pour :
commander les positions de la pluralité d'unités de traitement de coupe (31L, 31R, 331L, 331R) sur la base d'ensembles de données de commande pour la pluralité d'unités de traitement de coupe (31L, 31R, 331L, 331R), chaque ensemble des données de commande incluant une pluralité définie de données de segment incluant chacune un ensemble de valeurs de coordonnées et de données de vitesse de déplacement,
**caractérisé en ce que** le dispositif de commande (20, 220, 320) est configuré pour :
rediviser l'ensemble des données de commande respectivement en une pluralité définie de données de segment de telle sorte que des temps de commande pour le traitement de coupe tels qu'indiqués dans des ensembles de données de segment à des emplacements correspondants dans une séquence à partir du début du traitement sont identiques les uns aux autres parmi la pluralité d'unités de traitement de coupe (31L, 31R, 331L, 331R), et
comparer des ensembles de données de segment redivisées pour la pluralité d'unités de traitement de coupe (31L, 31R, 331L, 331R) qui sont à réaliser en même temps, et prédire si une interférence aura lieu ou non parmi la pluralité d'unités de traitement de coupe (31L, 31R, 331L, 331R) au moment de traitement de coupe indiqué par les ensembles de données de segment redivisées.

2. Dispositif de fabrication d'appareil dentaire (10, 310, 310) selon la revendication 1, **caractérisé en ce qu'**en tant que commande d'évitement d'interférence, le dispositif de commande (20, 220, 320) réalise une commande consistant à :
amener soit la section coupante de la première unité de traitement de coupe, soit l'autre section coupante de la seconde unité de traitement de coupe à attendre à une position à l'écart de la position d'interférence ;
rétracter soit la section coupante de la première unité de traitement de coupe, soit l'autre section coupante de la seconde unité de traitement de coupe depuis la position d'interférence ;
accélérer ou ralentir une vitesse de fonctionnement d'au moins une de la première unité de traitement de coupe et de la seconde unité de traitement de coupe ; ou
modifier une séquence de coupe sur la pièce à couper par le biais d'au moins une de la première unité de traitement de coupe et de la seconde unité de traitement de coupe.

3. Dispositif de fabrication d'appareil dentaire (10, 210, 310) selon la revendication 1 ou la revendication 2, **caractérisé en ce que** le dispositif de commande (20, 220, 320) :
commande une position de la première unité de traitement de coupe sur la base de premières données de commande, et commande une position de la seconde unité de traitement de coupe sur la base des secondes données de commande ;
analyse les premières données de commande et les secondes données de commande ; et
réalise la commande d'évitement d'interférence dans des cas dans lesquels la survenance d'une interférence est prédite entre la section coupante de la première unité de traitement de coupe et l'autre section coupante de la seconde unité de traitement de coupe.

4. Dispositif de fabrication d'appareil dentaire (10, 210, 310) selon la revendication 3, **caractérisé en ce que** le dispositif de commande (20, 220, 320) :
analyse les premières données de commande et les secondes données de commande par rapport à une suite de traitement de coupe sur la pièce à couper ;
réalise une correction afin de réaliser la commande d'évitement d'interférence, la correction étant réalisée sur une partie d'au moins une des premières données de commande et des secondes données de commande pour laquelle une interférence entre la section coupante de la première unité de traitement de coupe et l'autre section coupante de la seconde unité de traitement de coupe est prédite ; et
commande des positions respectives de la première unité de traitement de coupe et de la seconde unité de traitement de coupe sur la base des premières données de commande et des secondes données de commande après correction.

5. Dispositif de fabrication d'appareil dentaire (10, 210, 310) selon la revendication 3, **caractérisé en ce que** le dispositif de commande :
commande, sur la base de chacune des premières données de commande et des secondes données de commande divisées en une pluralité de segments, séquentiellement pour chaque segment, des positions respectives de la première unité de traitement de coupe et de la seconde unité de traitement de coupe,
analyse les premières données de commande et les secondes données de commande pour un segment un nombre prédéterminé de segments plus tard qu'un segment pour lequel une commande est actuellement exécutée ; et
dans des cas dans lesquels une interférence entre la section coupante de la première unité de traitement de coupe et l'autre section coupante de la seconde unité de traitement de coupe est prédite, réalise une correction afin de réaliser la commande d'évitement d'interférence, la correction étant réalisée sur au moins une des premières données de commande et des secondes données de commande pour le segment analysé.

6. Dispositif de fabrication d'appareil dentaire (10, 210, 310) selon l'une quelconque de la revendication 3 à la revendication 5, **caractérisé en ce que** le dispositif de commande (20, 220, 320) prédit une interférence entre la section coupante de la première unité de traitement de coupe et l'autre section coupante de la seconde unité de traitement de coupe en divisant les premières données de commande et les secondes données de commande en segments qui présentent chacun un temps de commande de la première unité de traitement de coupe basé sur les premières données de commande identique à un temps de commande de la seconde unité de traitement de coupe basé sur les secondes données de commande, et en comparant un segment des premières données de commande et un segment des secondes données de commande à exécuter en même temps.

7. Dispositif de fabrication d'appareil dentaire (10, 210, 310) selon l'une quelconque de la revendication 3 à la revendication 6, **caractérisé en ce que** le dispositif de commande (20, 220, 320) comprend :
une première section de commande qui commande la première unité de traitement de coupe sur la base des premières données de commande ;
une seconde section de commande qui commande la seconde unité de traitement de coupe sur la base des secondes données de commande ; et
une section d'ajustement (23) qui ajuste une synchronisation de commande d'au moins une de la première section de commande et de la seconde section de commande en fonction d'une comparaison d'un état d'avancement de processus de commande par la première section de commande sur la base des premières données de commande avec un autre état d'avancement de processus de commande par la seconde section de commande sur la base des secondes données de commande.

8. Dispositif de fabrication d'appareil dentaire (10, 210, 310) selon l'une quelconque de la revendication 1 à la revendication 7, **caractérisé en ce que** :
la première unité de traitement de coupe inclut une première section coupante et une deuxième section coupante ;
la seconde unité de traitement de coupe inclut une troisième section coupante et une quatrième section coupante ; et
le dispositif de commande (20, 220, 320) commande des positions de la première unité de traitement de coupe et de la seconde unité de traitement de coupe pour amener soit la première section coupante, soit la deuxième section coupante de la première unité de traitement de coupe, et pour amener soit la troisième section coupante, soit la quatrième section de coupe de la seconde unité de traitement de coupe, à entrer en contact avec une pièce à couper depuis des directions différentes et à exécuter la coupe sur la pièce à couper, et
le dispositif de commande (20, 220, 320) réalise une commande d'évitement d'interférence sur au moins une de la première unité de traitement de coupe et de la seconde unité de traitement de coupe de telle sorte que la première section coupante et la deuxième section coupante, et que la troisième section coupante et la quatrième section coupante, ne se déplacent pas vers une position d'interférence.

9. Dispositif de fabrication d'appareil dentaire (10, 210, 310) selon la revendication 8, **caractérisé en ce que** le dispositif de commande (20, 220, 320) réalise la commande d'évitement d'interférence de sorte qu'il existe une séparation de distance prédéterminée ou supérieure entre une section coupante présentant la taille la plus grande entre la première section coupante et la deuxième section coupante et une section coupante présentant la taille la plus grande entre la troisième section coupante et la quatrième section coupante.

10. Procédé de fabrication d'appareil dentaire exécuté par un ordinateur, le procédé de fabrication d'appareil dentaire comprenant :
la commande de positions respectives d'une pluralité d'unités de traitement de coupe (31L, 31R, 331L, 331R) de telle sorte que des sections coupantes respectives de la pluralité d'unités de traitement de coupe (31L, 31R, 331L, 331R) soient amenées à entrer en contact avec une pièce à couper à partir de directions différentes et à exécuter une coupe sur la pièce à couper ; et
la réalisation d'une commande d'évitement d'interférence sur au moins une de la première unité de traitement de coupe et de la seconde unité de traitement de coupe différente de la première unité de traitement de coupe, parmi la pluralité d'unités de traitement de coupe (31L, 31R, 331L, 331R), de telle sorte que la première unité de traitement de coupe et la seconde unité de traitement de coupe ne se déplacent pas vers une position d'interférence,
dans lequel la commande de positions respectives de la pluralité d'unités de traitement de coupe (31L, 31R, 331L, 331R) inclut :
la commande des positions de la pluralité d'unités de traitement de coupe (31L, 31R, 331L, 331R) sur la base d'ensembles de données de commande pour la pluralité d'unités de traitement de coupe (31L, 31R, 331L, 331R), chaque ensemble des données de commande incluant une pluralité définie de données de segment incluant chacune un ensemble de valeurs de coordonnées et de données de vitesse de déplacement, et **caractérisé en ce que**
la réalisation de la commande d'évitement d'interférence inclut :
la redivision de l'ensemble des données de commande respectivement en une pluralité définie de données de segment de sorte que les temps de commande pour le traitement de coupe tels qu'indiqués dans des ensembles de données de segment à des emplacements correspondants dans une séquence à partir du début du traitement sont identiques les uns aux autres parmi la pluralité d'unités de traitement de coupe (31L, 31R, 331L, 331R), et
la comparaison d'ensembles de données de segment redivisées pour la pluralité d'unités de traitement de coupe (31L, 31R, 331L, 331R) qui sont à réaliser en même temps, et la prédiction qu'une interférence va se produire ou non parmi la pluralité d'unités de traitement de coupe (31L, 31R, 331L, 331R) au moment de traitement de coupe indiqué par les ensembles de données de segment redivisées.

11. Programme de fabrication d'appareil dentaire qui, lorsqu'il est exécuté sur un ordinateur, amène l'ordinateur à mettre en œuvre le procédé de fabrication d'appareil dentaire selon la revendication 10.

12. Support de stockage stockant le programme de fabrication d'appareil dentaire selon la revendication 11.
